# EUROPEAN PATENT SPECIFICATION

(11) **EP 2 482 404 B1**
(45) Date of publication and mention of the grant of the patent: **27.11.2013**
(21) Application number: 12153099.2
(22) Date of filing: 30.01.2012
(51) Int. Cl.: H02G 3/08, H02G 3/12

(54) **Electrical installation box**
Elektroinstallationskasten
Boîte d'installation électrique

(30) Priority: 31.01.2011 NL 2006102
(43) Date of publication of application: 01.08.2012
(73) Proprietor: Attema B.V., 4203 NJ Gorinchem (NL)
(72) Inventor: Goth, Robin, 6862 GT Oosterbeek (NL)
(74) Representative: Mertens, Hans Victor

(56) References cited:
- WO-A1-01/31759
- FR-A1- 2 881 286
- US-A- 5 959 246

## Description

### FIELD OF THE INVENTION

The invention relates to the field of electrical installation material, and more specifically to an installation box for mounting in a wall, in particular, but not exclusively, in a hole in a hollow wall.

Herein, an installation box is deemed equivalent to an electrical installation box, a junction box, and an electrical junction box. The installation box may be used for housing installation material in general, (junctions between) electrical conductors, electrical signal wires, optical cables or fibers, and may further accommodate switching material, one or more electrical or optical sockets, signaling material, telecommunication material, building automation material, controller or computer material, and the like.

### BACKGROUND OF THE INVENTION

Installation boxes for mounting in a hollow wall are known in the art.

US 5 959 246 A discloses an electric box extender comprising a face member, no bottom, and two side walls and two end walls having folds to facilitate displacement of the side walls and end walls inwardly toward a central axis through the face member. The extender cannot be placed in an opening in a wall which has a dimension smaller than the dimensions of the side walls and end walls at the face member.

WO 01/31759 A1 discloses a circular coupling frame having side wall parts connected with film hinges, flanges, and no bottom. The frame can be collapsed for the flanges of the frame to pass through a hole in a wall. In another embodiment, a non-collapsible double frame may be inserted in a double hole.

FR 2 881 286 A1 discloses a circular-shaped installation box of which the diameter can be changed by the provision of flexible parts in the side walls thereof.

NL1019822 discloses an installation box having an elliptical or oval shape when seen in cross-section in a plane parallel to a bottom wall of the installation box. Thus, the installation box comprises two opposite substantially semi-circular side wall portions and two opposite substantially straight side wall portions connecting the semi-circular side wall portions. For mounting such an installation box in a hollow wall (having a relatively thin front wall board secured to a back support frame), two staggered circular holes having about the same radius as the radius of the semi-circular side wall portions are made. Any remaining material in the area where the hole diameters cross, is removed to complete the preparation the hole for reception of the installation box.

In preparing an opening in a wall, such as a hollow wall, for an oval installation box, where two staggered circular holes are made being a part of an envisaged elongated, oval opening, a problem arises when the distance between the centers of the circular holes is improper, in particular too short, for the resulting oval hole to accommodate the installation box, in particular when the installation box is substantially made from a relatively rigid material.

WO 01/31759 does not provide a solution to place the double frame when the centers of the double hole do not have a correct center-to-center distance.

FR 2 881 286 is not concerned with fitting installation boxes in a double hole in a wall, where the double hole does not have a correct center-to-center distance.

### SUMMARY OF THE INVENTION

It would be desirable to provide an installation box which can fit into a wall opening having a dimension being slightly smaller than the corresponding installation box dimension.

To better address this concern, in an aspect of the invention an installation box is provided, comprising a bottom wall and a side wall connected to the bottom wall, the side wall comprising an edge defining an installation box opening. The installation box comprises two spaces integrated to form an interior space, the two spaces having a center-to-center distance. The side wall has two opposite side wall sections each extending in a side wall direction parallel to the bottom wall. The side wall sections each comprise at least two side wall parts interconnected by a deformable member allowing the center-to-center distance of the installation box in said side wall direction to be changed.

By providing the installation box with deformable members in opposite side wall sections, the installation box can be compressed (i.e. its dimension in a compression direction, which is said side wall direction, can be decreased). Accordingly, even when a wall opening for accommodating the installation box has been made slightly too small to fit the purpose, then still the installation box can be mounted in the opening having a smaller dimension in the side wall direction of the installation box, as determined by the extent in which the deformable member and the remainder of the installation box can deform for the installation box to be made smaller in the side wall direction. The installation box can be mounted by compressing and placing it in a compressed condition, without having to adapt the opening. This saves potentially difficult and laborious work, and tolerances in making the wall opening are less critical. If the wall opening would be too large in said side wall direction, the deformable member may also allow the center-to-center distance of the two spaces of the installation box in the side wall direction to be adapted to the wall opening.

In an embodiment of the installation box according to the present invention, the deformable member is an elastic member. The elasticity of the deformable member allows the dimension of the installation box in the side wall direction to be made temporarily smaller than a corresponding dimension of an opening in the wall while mounting the installation box in the wall opening, whereas the elastic member will try to bring the installation box back to its original shape and size, whereby the installation box fits tightly in the wall opening after mounting.

In an embodiment of the installation box according to the present invention, the deformable member comprises at least two strips extending transversely to the bottom wall of the installation box, each strip having a first longitudinal edge and a second longitudinal edge, the first longitudinal edge being connected to a side wall part of a side wall section or to a second longitudinal edge of a further strip, and the second longitudinal edge being connected to a first longitudinal edge of a further strip or a further side wall part of said side wall section. Such a pair of strips, in particular when they are arranged at an angle less than 180 degrees relative to one another, provide the envisaged deformability by a buckling or bending or folding action of each strip with relative to an adjacent part.

In an embodiment of the installation box of the present invention, the deformable member extends from the bottom wall to the installation box opening. In particular for use with an opening in a hollow wall, this provides the necessary deformability of the installation box near the installation box opening, where the installation box, after mounting, is in contact with the wall, in particular a front board thereof.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 depicts a perspective view of an embodiment of an installation box according to the present invention, showing an upper part thereof.
Figure 2 depicts another perspective view of the installation box of Figure 1, showing a bottom side thereof.
Figure 3 depicts a top view of a further embodiment of an installation box according to the present invention.
Figure 4 depicts a side view of the installation box of Figure 3, as seen in a direction of arrow IV.

### DETAILED DESCRIPTION OF EMBODIMENTS

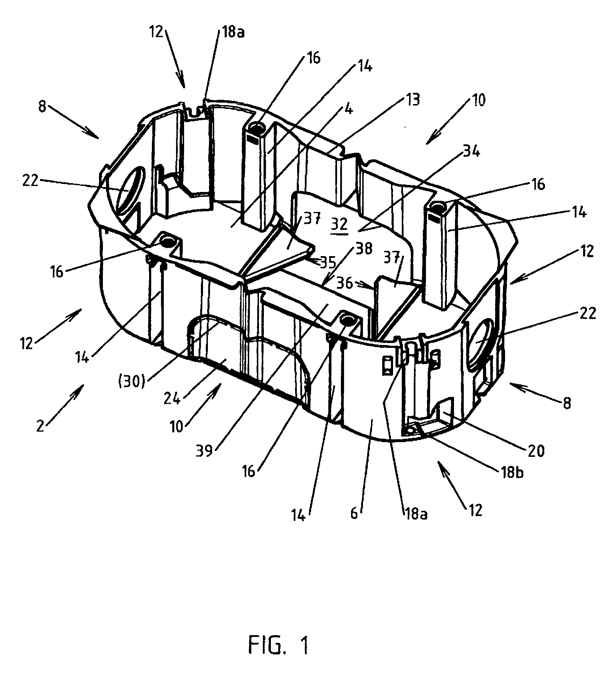

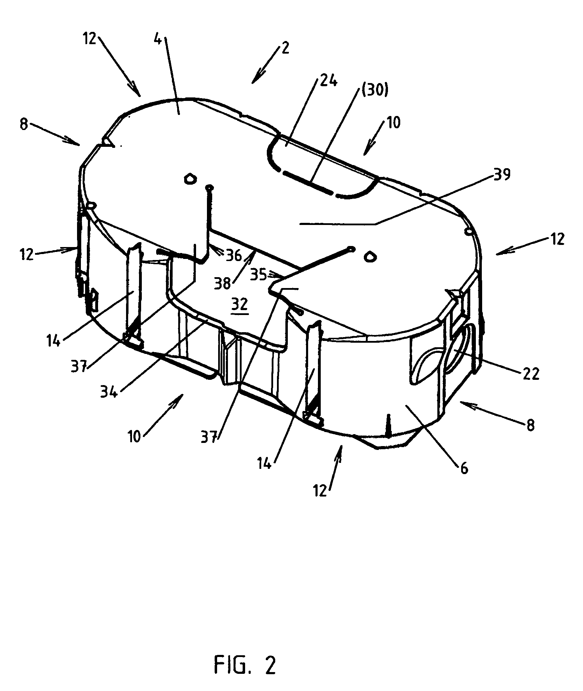

Figures 1 and 2 depict an installation box 2 having a bottom wall 4 and a side wall 6. The side wall 6 has two opposite short side wall sections 8 and two opposite long side wall sections 10 connected by rounded corner side wall sections 12. The side wall 6 has an edge 13 facing away from the bottom wall 4, the edge defining an installation box opening. The installation box 2 defines a space in which electrical installation material, such as a socket structure, a switching structure, or other installation material, can be mounted, and in which connections between conductors can be made. The installation box 2 is configured to be mounted in an elongated hole in a hollow wall, such as a wall made of a frame of wooden beams or metal profiled sections, covered by front wall boards containing wood or gypsum (plasterboard, gypsumboard). When mounted in a hollow wall, the edge of the side wall 6 of the installation box 2 in substantially aligned with the front side of the wall, whereas the remaining structure of the installation box 2 is situated in the wall, partly in a board, and partly behind the board of the wall. The installation box 2 has ribs 14 extending along the long side wall sections 10 in a direction from the bottom wall 4 to the edge 13, and provided with threaded holes 16 for inserting screws (not shown) for mounting installation material, a cover, etc.. Further, the installation box 2 is provided with support structures 18a, 18b for supporting a shaft (not shown) carrying a radially extending arm (not shown) which can be rotated from a rest position in a recess 20 to an active position out of the recess 20 by rotating the shaft, such that the arm will form a hook member to abut a back side of a wall board, to prevent the installation box 2 to be pulled out of the (hole in the) wall in which it is mounted.

The installation box 2 is intended to be connected to one or more flexible, semi-rigid or rigid tubes mounted in the wall. For this purpose, at the short side wall sections 8, holes 22 are provided, where a sprout part (not shown) having a side wall section comprising a tubular section adjoining the hole 22 can be mounted by a sliding action.

In a part of one of the long side wall sections 10 of the side wall 6, and in an adjacent part of the bottom wall 4, a wall part 24 is provided which is connected to the remainder of the walls 4, 6 by a weakened edge connection such that the wall part 24 can be removed easily and in a predefined way, to provide an opening 30 for placing a sprout part.

A part of the opposite long side wall section 10 of the side wall 6, and an adjacent part of the bottom wall 4 define an opening 32 for placing a sprout part.

It is seen that the bottom wall 4 of the installation box 2 comprises an opening 32 partly in a long side wall section 10 opposite the long wall section 10 containing the wall part 24, and partly in the bottom wall 4. After manufacture of the installation box 2, and before use thereof, the edges of the opening 32 are defined by edge 34 of an elongated cut-out in the long side wall section 10, edges 35, 36 of two opposite bottom wall side flap sections 37, and an edge 38 of a bottom wall back flap section 39.

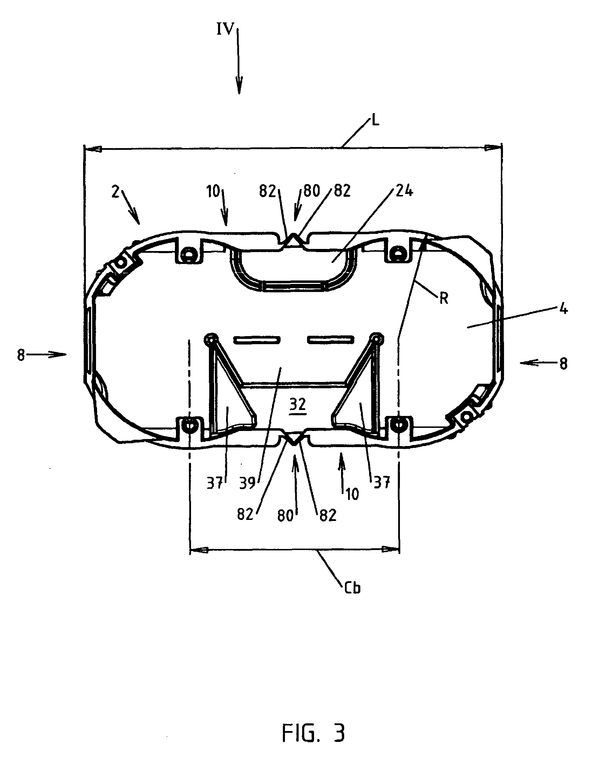

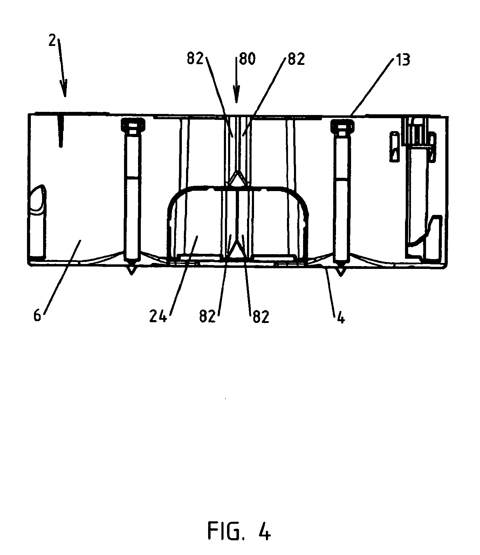

As is seen in Figures 1 and 2, and further in Figures 3 and 4, the installation box 2 in fact comprises two basically partly circular shaped spaces integrated to form a substantially oval-shaped interior space. For this reason, the installation box 2 may also be referred to as a double box.

The long side wall sections 10 each comprise a deformable member 80 in the central part thereof. The elongated deformable member 80 extends at right angles to the bottom wall 4, and comprises two elongated strips 82. The strips 82 extend from the bottom wall 4 of the installation box 2 to the installation box opening at the edge 13. Each strip is substantially flat, and extends in a plane at an angle greater than zero degrees, for example about thirty (30) to sixty (60) degrees, for example about forty five (45) degrees as shown in Figure 3, to the general plane of the corresponding long side wall section 10. The adjacent strips of the deformable member 80 are connected to each other along a longitudinal edge of both strips, thus including an angle of e.g. about ninety (90) degrees between them.

The deformable member may be formed from the same material and in the same production step as the side wall section (such as long side wall section 10) of which it is part, or the installation box 2 of which it is part. The deformable member may be shaped in many different ways, e.g. from more than two strips interconnected at their longitudinal edges, from one strip having a curved cross-section, or in another way providing a deformability of the long side wall section 10 in a direction of the long side wall section 10 parallel to the plane of the bottom wall 4 of the installation box 2. The long side wall section 10 may comprise more than one deformable member 80. The deformable member may be elastic.

In use of the installation box 2, the deformable members 80 in each of the opposite long side wall sections 10 allow in particular the part of the installation box 2 remote from the bottom wall 4 to vary its length dimension, as indicated by L in Figure 3, within a limited range. More in particular, the length of the installation box 2 may be decreased by a limited amount by compressing the installation box 2 at its short side wall sections 8, moving the short side wall sections 8 towards each other. In case the deformable member has elastic properties, the installation box may (strive to) take its original shape when the compression is released.

The utility of the deformable members appears when installing the installation box 2 in a hole in a hollow wall. This hole conventionally is made by drilling two circular holes having a radius R, and at a predetermined center-to-center distance Ch, and removing excess wall material to form the desired oval hole. When the center-to-center distance Ch of the drilled holes is smaller than a center-to-center distance Cb (see Figure 3) as required by the installation box 2, then the deformable members allow at least the part of the installation box 2 remote from the bottom wall 4 to be longitudinally compressed such that the installation box 2 may still fit in the hole in the wall without any further operation on the wall to adapt the hole dimensions.

It is noted that not only the side wall 6 of the installation box 2 may comprise deformable members, but also the bottom wall of the installation box may comprise one or more of such members, in particular extending in a direction from one side wall deformable member to an opposite side wall deformable member, in particular extending from one side wall section to the opposite side wall section.

As explained above, an installation box comprises a bottom wall and a side wall connected to the bottom wall. The side wall comprises an edge defining an installation box opening. The installation box comprises two spaces integrated to form an interior space. The two spaces have a center-to-center distance. The side wall has two opposite side wall sections each extending in a side wall direction parallel to the bottom wall. The side wall sections each comprise at least two side wall parts interconnected by a deformable member, such as an elastic member, allowing the center-to-center distance of the installation box in said side wall direction to be changed.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

The term coupled, as used herein, is defined as connected, although not necessarily directly.

## Claims

1. Installation box (2), comprising a bottom wall (4) and a side wall (6) connected to the bottom wall, the side wall comprising an edge defining an installation box opening, said side wall (6) having two opposite side wall sections (10) each extending in a side wall direction parallel to the bottom wall (4), and wherein said side wall sections (10) each comprise at least two side wall parts interconnected by a deformable member (80) **characterized in that** the installation box comprises two spaces integrated to form an interior space, the two spaces having a center-to-center distance (Cb) and the deformable member (80) allowing the center-to-center distance (Cb) of the installation box (2) in said side wall direction to be changed.

2. Installation box of claim 1, wherein the deformable member is an elastic member.

3. Installation box of claim 1 or 2, wherein the deformable member comprises at least two strips (82) extending transversely to the bottom wall of the installation box, each strip having a first longitudinal edge and a second longitudinal edge, the first longitudinal edge being connected to a side wall part of a side wall section or to a second longitudinal edge of a further strip, and the second longitudinal edge being connected to a first longitudinal edge of a further strip or a further side wall part of said side wall section.

4. Installation box of claim 3, wherein each strip is substantially flat.

5. Installation box of claim 3 or 4, wherein each strip extends in a plane at an angle greater than zero degrees to the general plane of the corresponding side wall section.

6. Installation box of claim 5, wherein said strip extends in a plane at an angle of about 30° to about 60° to the general plane of the corresponding side wall section.

7. Installation box of claim 5 or 6, wherein said strip extends in a plane at an angle of about 45° to the general plane of the corresponding side wall section.

8. Installation box of any of the preceding claims, wherein the deformable member extends from the bottom wall to the installation box opening.

9. Installation box of any of the preceding claims, wherein the deformable member is formed from a same material as the corresponding side wall section.

10. Installation box of any of the preceding claims, wherein the deformable member is formed in the same production step as the corresponding side wall section.

## Patentansprüche

1. Installationskasten (2), welcher eine Bodenwand (4) und eine Seitenwand (6) umfasst, welche mit der Bodenwand verbunden ist, wobei die Seitenwand eine Kante umfasst, welche eine Öffnung des Installationskastens definiert, wobei die Seitenwand (6) zwei gegenüberliegende Seitenwandabschnitte (10) aufweist, welche sich jeweils in eine Seitenwandrichtung parallel zu der Bodenwand (4) erstrecken, und wobei die Seitenwandabschnitte (10) jeweils mindestens zwei Seitenwandteile umfassen, welche durch ein verformbares Teil (80) gekoppelt sind, **dadurch gekennzeichnet, dass** der Installationskasten zwei Räume umfasst, welche integriert sind, um einen Innenraum auszubilden, wobei die zwei Räume einen Abstand (Cb) von Zentrum zu Zentrum aufweisen und wobei das verformbare Teil (80) ermöglicht, dass der Abstand (Cb) von Zentrum zu Zentrum des Installationskastens (2) in der Seitenwandrichtung verändert wird.

2. Installationskasten nach Anspruch 1, **dadurch gekennzeichnet, dass** das verformbare Teil ein elastisches Teil ist.

3. Installationskasten nach Anspruch 1 oder 2, **dadurch gekennzeichnet, dass** das verformbare Teil mindestens zwei Bänder (82) umfasst, welche sich quer zu der Bodenwand des Installationskastens erstrecken, dass jedes Band eine erste Längskante und eine zweite Längskante aufweist, dass die erste Längskante mit einem Seitenwandteil eines Seitenwandabschnitts oder mit einer zweiten Längskante eines weiteren Bandes verbunden ist, und dass die zweite Längskante mit einer ersten Längskante eines weiteren Bandes oder eines weiteren Seitenwandteils des Seitenwandabschnitts verbunden ist.

4. Installationskasten nach Anspruch 3, **dadurch gekennzeichnet, dass** jedes Band im Wesentlichen flach ist.

5. Installationskasten nach Anspruch 3 oder 4, **dadurch gekennzeichnet, dass** sich jedes Band in einer Ebene mit einem Winkel, welcher größer als Null Grad ist, zu der allgemeinen Ebene des entsprechenden Seitenwandabschnitts erstreckt.

6. Installationskasten nach Anspruch 5, **dadurch gekennzeichnet, dass** sich das Band in einer Ebene mit einem Winkel von ungefähr 30° bis ungefähr 60° zu der allgemeinen Ebene des entsprechenden Seitenwandabschnitts erstreckt.

7. Installationskasten nach Anspruch 5 oder 6, **dadurch gekennzeichnet, dass** sich das Band in einer Ebene mit einem Winkel von ungefähr 45° zu der allgemeinen Ebene des entsprechenden Seitenwandabschnitts erstreckt.

8. Installationskasten nach einem der vorhergehenden Ansprüche, **dadurch gekennzeichnet, dass** sich das verformbare Teil von der Bodenwand zu der Öffnung des Installationskastens erstreckt.

9. Installationskasten nach einem der vorhergehenden Ansprüche, **dadurch gekennzeichnet, dass** das verformbare Teil aus demselben Material wie der entsprechende Seitenwandabschnitt ausgebildet ist.

10. Installationskasten nach einem der vorhergehenden Ansprüche, **dadurch gekennzeichnet, dass** das verformbare Teil in demselben Herstellungsschritt wie der entsprechende Seitenwandabschnitt ausgebildet ist.

## Revendications

1. Boîte d'installation (2) comprenant une paroi inférieure (4) et une paroi latérale (6) raccordée à la paroi inférieure, la paroi latérale comprenant un bord définissant une ouverture de boîte d'installation, ladite paroi latérale (6) ayant deux sections de paroi latérale (10) s'étendant chacune dans une direction de paroi latérale parallèle à la paroi inférieure (4), et dans laquelle lesdites sections de paroi latérale (10) comprennent chacune au moins deux parties de paroi latérale interconnectées par un élément déformable (80), **caractérisée en ce que** la boîte d'installation comprend deux espaces intégrés pour former un espace intérieur, les deux espaces ayant une distance de centre à centre (Cb) et l'élément déformable (80) permettant de modifier la direction de centre à centre (Cb) de la boîte d'installation (2) dans ladite direction de paroi latérale.

2. Boîte d'installation selon la revendication 1, dans laquelle l'élément déformable est un élément élastique.

3. Boîte d'installation selon la revendication 1 ou 2, dans laquelle l'élément déformable comprend au moins deux bandes (82) s'étendant transversalement par rapport à la paroi inférieure de la boîte d'installation, chaque bande ayant un premier bord longitudinal et un second bord longitudinal, le premier bord longitudinal étant raccordé à une partie de paroi latérale d'une section de paroi latérale ou à un second bord longitudinal d'une autre bande, et le second bord longitudinal étant raccordé à un premier bord longitudinal d'une autre bande ou d'une autre partie de paroi latérale de ladite section de paroi latérale.

4. Boîte d'installation selon la revendication 3, dans laquelle chaque bande est sensiblement plate.

5. Boîte d'installation selon la revendication 3 ou 4, dans laquelle chaque bande s'étend dans un plan selon un angle supérieur à zéro degré par rapport à un plan général de la section de paroi latérale correspondante.

6. Boîte d'installation selon la revendication 5, dans laquelle ladite bande s'étend dans un plan à un angle d'environ 30° à environ 60° par rapport au plan général de la section de paroi latérale correspondante.

7. Boîte d'installation selon la revendication 5 ou 6, dans laquelle ladite bande s'étend dans un plan à un angle d'environ 45° par rapport au plan général de la section de paroi latérale correspondante.

8. Boîte d'installation selon l'une quelconque des revendications précédentes, dans laquelle l'élément déformable s'étend de la paroi inférieure à l'ouverture de boîte d'installation.

9. Boîte d'installation selon l'une quelconque des revendications précédentes, dans laquelle l'élément déformable est formé à partir du même matériau que la section de paroi latérale correspondante.

10. Boîte d'installation selon l'une quelconque des revendications précédentes, dans laquelle l'élément déformable est formé lors de la même étape de production que la section de paroi latérale correspondante.
